Europäisches Patentamt

(19) European Patent Office

Office européen des brevets

(11) Numéro de publication: **0 065 456**

**B1**

(12) **FASCICULE DE BREVET EUROPEEN**

(45) Date de publication du fascicule du brevet: **03.09.86**

(51) Int. Cl.⁴: **G 01 N 23/225,** H 01 J 37/252

(21) Numéro de dépôt: **82400834.6**

(22) Date de dépôt: **06.05.82**

(54) **Dispositif pour déterminer la densité des états électroniques inoccupés d'un matériau situés au-dessus du niveau de Fermi.**

(30) Priorité: **14.05.81 FR 8109613**

(43) Date de publication de la demande: **24.11.82 Bulletin 82/47**

(45) Mention de la délivrance du brevet: **03.09.86 Bulletin 86/36**

(84) Etats contractants désignés: **DE GB**

(56) Documents cités:
**FR-A-2 428 836**

**APPLIED PHYSICS, vol. 18, 1979, pages 375-380, Springer Verlag, Heidelberg, DE, G. DENNINGER et al.: "A VUV isochromat spectrometer for surface analysis"**

Le dossier contient des informations techniques présentées postérieurement au dépôt de la demande et ne figurant pas dans le présent fascicule.

(73) Titulaire: **COMMISSARIAT A L'ENERGIE ATOMIQUE Etablissement de Caractère Scientifique Technique et Industriel 31/33, rue de la Fédération F-75015 Paris (FR)**

(72) Inventeur: **Baptist, Robert 3, rue Lieutenant Chanaron F-38000 Grenoble (FR)** Inventeur: **Chauvet, Gérard 8, rue Charles Lory F-38000 Grenoble (FR)**

(74) Mandataire: **Mongrédien, André et al c/o BREVATOME 25, rue de Ponthieu F-75008 Paris (FR)**

(56) Documents cités:
**PHYSICAL REVIEW B, SOLID STATE THIRD SERIES, vol. 7, no. 8, 15 avril 1973, pages 3411-3419, New York, US, R.R. TURTLE: "Densities of unfilled one-electron levels in the elements vanadium and iron through zinc by means of X-ray continuum isochromats"**

Courier Press, Leamington Spa, England.

EP 0 065 456 B1

## Description

La présente invention a pour objet un dispositif pour déterminer la densité des états électroniques inoccupés d'un matériau, situés au-dessus du niveau de Fermi ainsi que l'analyse par fluorescence ultraviolette d'un matériau excité par des électrons. Ce dispositif, associé à un appareil de photoémission, permet de déterminer la structure électronique d'un matériau, la valeur de la bande d'énergie interdite pour les nouveaux semi-conducteurs ou isolants ainsi que le caractère orbital des électrons appartenant à la bande de conduction dudit matériau.

Dans un métal le niveau de Fermi coïncide avec le niveau d'énergie le plus élevé effectivement occupé par des électrons. Donc, dans le cas d'un matériau métallique, le niveau de Fermi est situé dans la bande de conduction tandis que dans les isolants et les semi-conducteurs, le niveau de Fermi est situé entre la bande de conduction et la bande de valence, c'est-à-dire dans la bande d'énergie interdite.

Pour déterminer la densité des états électroniques inoccupés, situés au-dessus du niveau de Fermi, d'un matériau, on bombarde un échantillon dudit matériau au moyen d'un faisceau d'électrons d'intensité suffisante et d'énergie initiale $E_i$. Ces électrons en pénétrant dans l'échantillon sont freinés et ont une certaine probabilité de passer de leur énergie initiale $E_i$ à des états d'énergie finale $E_f$ inférieure à $E_i$. En général, le passage entre ces deux niveaux d'énergie s'accompagne de l'émission de photons dont l'énergie $h v_{if}$ est telle que $h v_{if} = E_i - E_f$.

En première approximation, le nombre de photons émis présentant l'énergie $h v_{if}$ est proportionnel à la densité des états électroniques inoccupés notée $n(E_f)$ dépendant du niveau d'énergie $E_f$. Un balayage en énergie initiale $E_i$ des électrons incidents permet, en collectant, au moyen de systèmes appropriés, les photons d'énergie fixe de déterminer la densité des états électroniques $n(g)$.

L'étude des photons d'énergie fixe, c'est-à-dire de même longueur d'onde, provenant d'un échantillon bombardé par un faisceau d'électrons est connu sous le nom de "Bremsstrahlung Isochromat Spectroscopy" ou sous l'abréviation "BIS", c'est-à-dire de spectroscopie isochromatique de rayonnement de freinage. On peut également l'appeler "photoémission inverse".

Les dispositifs connus jusqu'à ce jour permettent de détecter soit des photons de haute énergie, c'est-à-dire que l'énergie des photons est supérieure à 0,5 KeV, soit des photons de basse énergie, c'est-à-dire que l'énergiedes photons est inférieure à 10 eV.

L'un des dispositifs détectant des photons de haute énergie a été décrit dans un article intitulé "Densities of Unfilled One-Electron Levels in the Elements Vanadium and Iron through Zinc by Means of X-Ray Continuum Isochromats" paru dans physical Review B, 3éme série, vol. 7, n° 8, pages 3411 à 3419. Cet article décrit un dispositif permettant de ne détecter que des photons d'énergie égale à 0,53 KeV d'un rayonnement X au moyen d'un monochromateur X fixe. L'utilisation d'un monochromateur X difficile à régler et le fait que ce dispositif présente de grandes dimensions le rendent peu commode à utiliser.

L'un des dispositifs détectant des photons de faible énergie a été décrit dans un article intitulé "A VUV Isochromat Spectrometer for Surface Analysis" paru dans Applied Physics 18 (1979) pages 375 à 380. Cet article décrit un dispositif permettant de ne détecter que des photons d'énergie égale à 9,7 eV d'un rayonnement ultraviolet (U.V.) au moyen d'un compteur Geiger-Muller placé derrière une fenêtre de fluorure de lithium.

Le principal inconvénient de ces deux dispositifs, ainsi que de tous les dispositifs connus, est qu'ils ne peuvent détecter que des photons d'une énergie bien définie, c'est-à-dire qu'ils ne fonctionnent qu'à une seule longueur d'onde.

L'invention a justement pour objet un dispositif permettant de remédier à ces inconvénients, et permettant notamment de travailler dans une grande gamme de longueurs d'onde. Le dispositif de l'invention permet en particulier la détection et l'analyse de photons dont l'énergie est comprise entre 10 et 100 eV, c'est-à-dire dont la longueur d'onde est comprise entre 100 et 1 000 Å.

Par ailleurs, on connaît des spectromètres de Röntgen dans lesquels un échantillon, bombardé par un faisceau d'électrons d'énergie fixe, émet un faisceau de Röntgen, c'est-à-dire des rayons X que l'on détecte avec un cristal analyseur tournant. Un tel spectromètre est décrit dans le document FR—A—2 428 836.

De façon plus précise, l'invention a pour objet un dispositif pour déterminer la densité des états électroniques inoccupés d'un matériau, situés au-dessus du niveau de Fermi, et pour effectuer l'analyse par fluorescence ultraviolette d'un matériau excité par des électrons comprenant:

— une enceinte à vide susceptible de contenir un échantillon d'un matériau;

— des moyens pour créer un faisceau d'électrons d'énergie $E_i$, présentant une intensité suffisante pour que leur interaction avec l'échantillon soit aisément détectable, les électrons acquèrant, alors, des énergies $E_f$ inférieures à l'énergie $E_i$, le passage entre les deux niveaux d'énergie s'accompagnant d'une émission de photons dont l'énergie $h v_{if}$ est telle que $h v_{if} = E_i - E_f$;

— des moyens pour effectuer un balayage en énergie $E_i$; et

— des moyens de mesure du rayonnement provenant de l'échantillon;

ce dispositif étant caractérisé en ce que les moyens de mesure sont placés sous vide, et en ce qu'ils comprennent:

— une deuxième enceinte munie de deux tubes, inclinés l'un par rapport à l'autre, un premier tube pénétrant dans l'enceinte à vide, muni d'une fente d'entrée de largeur réglable, située dans l'enceinte à vide, et un deuxième tube muni d'une fente de sortie réglable;

— un réseau de diffraction susceptible de tourner autour d'un axe parallèle à gravure de celui-ci, permettant de sélectionner l'une des longueurs d'onde des photons émis, ledit réseau étant situé dans la deuxième enceinte;

— des moyens pour faire tourner ledit réseau, l'angle de rotation du réseau étant lié à la sélection de ladite longueur d'onde; et

— des moyens de comptage des photons de même longueur d'onde sélectionnée par le réseau, lors du balayage en énergie des électrons, ces moyens étant situés en regard de la fente de sortie.

Selon un mode de réalisation préféré de l'invention, le réseau permet de sélectionner des longueurs d'onde comprise entre 100 et 1 000 angströms.

Selon un autre mode de réalisation préféré de l'invention, les moyens pour créer le faisceau d'électrons comprennent un filament, situé dans l'enceinte à vide et porté à un potentiel V par rapport à l'échantillon.

La commande de chauffage du filament est de préférence effectuée de manière pulsée ainsi que la détection et le comptage des photons présentant la détection et le comptage des photons présentant la même longueur d'onde, la commande de chauffage étant alternée avec celle de la détection et du comptage.

Selon un autre mode de réalisation préféré de l'invention, le premier tube comprend un soufflet métallique permettant de régler la position des moyens de mesure par rapport à celle de l'échantillon, lorsque le dispositif est en fonctionnement.

D'autres caractéristiques et avantages de l'invention ressortiront mieux de la description qui va suivre, donnée à titre purement explicatif mais nullement limitatif, en référence aux figures annexées, dans lesquelles:

— la figure 1 représente le principe physique de l'invention,

— la figure 2 représente schématiquement le dispositif de l'invention,

— la figure 3 représente un schéma synoptique du dispositif de la figure 2,

— la figure 4 représente le spectre isochromatique du rayonnement de freinage du platine pour des photons présentant une énergie de 24,8 électrons-volts, c'est-à-dire une longueur d'onde de 500 angströms; les courbes qui y sont représentées donnent la densité des états électroniques inoccupés $n(E_f)$ soit le nombre de photons de 500 angströms en fonction de l'énergie initiale des électrons $E_i$, exprimée en électron-volt (eV).

— la figure 5 représente le nombre de photons, noté P, émis par fluorescence ultraviolette d'un échantillon de platine en fonction de la longueur d'onde λ exprimée en Å.

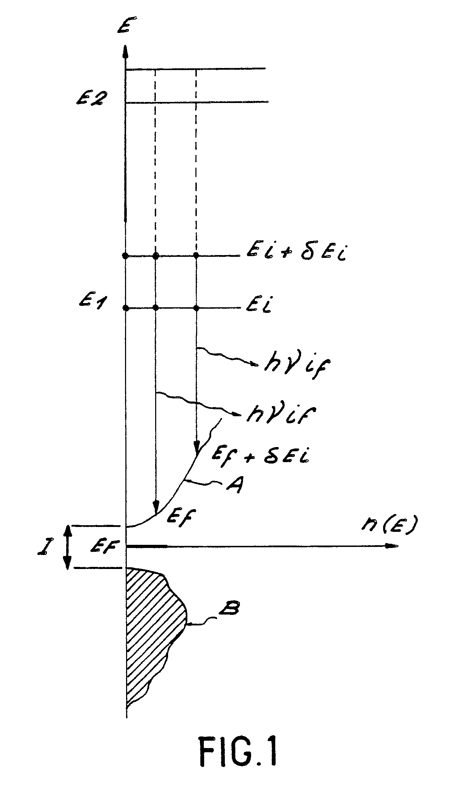

Sur la figure 1 on a porté en abscisse la densité d'états électroniques occupés séparée d'une densité d'états électroniques inoccupés, la densité d'états étant notée $n(E)$, par une bande interdite (I) tandis qu'en ordonnée on a porté les énergies E.

On remarque qu'un électron d'énergie initiale $E_i$ effectue une transition vers un état d'énergie finale $E_f$ avec émission d'un photon d'énergie $hv_{if}$.

De même on voit qu'un électron d'énergie $E_i+\Delta E_i$ effectue une transition vers un état d'énergie finale $E_f+\Delta E_i$ avec émission, à nouveau, d'un photon de même énergie $hv_{if}$. La mesure du nombre de photons d'énergie $hv_{if}$ émis lorsque l'énergie $E_i$ varie permet de tracer la courbe A représentant la densité des états électroniques inoccupés et, en outre, la position du bas de la bande interdite par rapport au niveau de Fermi noté $E_F$.

Ceci est tout à fait complémentaire de la photoémission qui permet de déterminer la forme (courbe B) de la densité des états électroniques occupés ainsi que la position du haut de la bande interdite par rapport au niveau de Fermi.

Ainsi le tracé de ces deux courbes A et B permet de déterminer la valeur de la bande interdite.

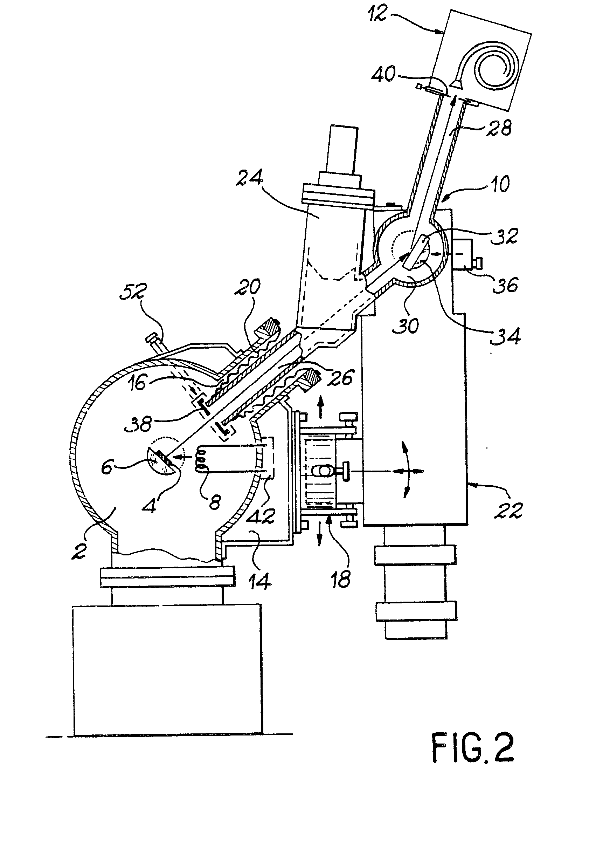

Sur la figure 2, on a représenté un dispositif de l'invention comportant, entre autres, une enceinte à vide 2 dans laquelle sont placés un échantillon d'un matériau 4 à étudier, placé sur un support 6, et un filament chauffé 8 permettant de créer un faisceau d'électrons d'intensité au moins égale à 1 m A et d'énergie initiale $E_i$, ces électrons étant susceptibles de pénétrer dans l'échantillon 4. Ces électrons, en pénétrant dans l'échantillon, sont freinés et peuvent acquérir des énergies finales $E_f$ inférieures à $E_i$; la conservation de l'énergie entre l'énergie intiale et l'énergie finale se traduit par l'émission de photons d'énergie $hv_{if}$.

La valeur de cette énergie $hv_{if}$, donc de la longueur d'onde

$$\lambda_{if} \left(\lambda_{if} = \frac{c}{v_{if}}\right)$$

c étant la vitesse de la lumière, dépend de l'énergie initiale et de l'énergie finale des électrons. L'énergie initiale $E_i$ peut être modifiée en effectuant un balayage en énergie. Le nombre d'électrons acquérant l'énergie finale $E_f$ dépend en première approximation de la densité des états électroniques inoccupés $n(E_f)$ du matériau, situés au-dessus du niveau de Fermi, donc le nombre de photons émis, dépend de la valeur de $E_i$ et de la densité des états électroniques $n(E_f)$.

En conséquence, pour déterminer le nombre $n(E_f)$ on effectue un premier balayage en énergie $E_i$ autour d'un niveau d'énergie $E_1$ en comptant le nombre de photons ayant par exemple la longueur d'onde $\lambda_1$, ensuite on peut effectuer un autre balayage en énergie $E_i$ autour d'un niveau d'énergie $E_2$ en détectant et mesurant le nombre de photons de longueur d'onde $\lambda_2$, etc. Ceci permet de préciser le caractère orbital des états d'énergie finaux atteints (voir figure 1).

Les photons de même longueur d'onde sont sélectionnés au moyen, d'un monochromateur de référence générale 10 puis détectés et comptabilisés au moyen d'un détecteur 12 de type "channeltron" qui est un photomultiplicateur tubulaire utilisé en tant que compteur d'impulsions.

Ce monochromateur 10 est monté sur un châssis 14 permettant de le fixer sur l'enceinte à vide 2 au niveau d'une ouverture 16 pratiquée dans l'enceinte 2. Un système de réglage 18 et un soufflet métallique 20 sont prévus sur le châssis 14 afin de positionner correctement le monochromateur sur l'enceinte 2 pour que le réseau de diffaction 32, constituant le monochromateur, reçoive les photons en provenance de l'échantillon 4 et qu'après dispersion par le réseau les photons de même énergie, sélectionnés par le monochromateur, arrivent correctement sur le détecteur 12.

Afin de créer un vide poussé de l'ordre de $10^{-9}$ millibars (mb) dans le monochromateur 10, ce qui permet de conserver un vide de $10^{-11}$ mb dans l'enceinte 2, le monochromateur est relié à un système de pompage 22 comportant par exemple, de façon connue un piège à azote liquide, une pompe turbomoléculaire, une pompe primaire et différentes vannes.

Le dispositif, représenté sur la figure 2 peut, de plus, être muni d'une vanne 24 permettant d'isoler si nécessaire le monochromateur 10, afin de conserver le vide effectué dans l'enceinte 2. Ceci peut être utilisé par exemple pour changer de réseau.

De façon plus précise, le monochromateur 10 peut être constitué de deux tubes 26 et 28 formant entre eux un angle fixe de 142° et reliés entre eux par l'intermédiaire d'une enceinte 30 contenant le réseau de diffraction 32 supporté par un support 34. Ce réseau est susceptible de tourner autour d'un axe perpendiculaire au plan de la figure, c'est-à-dire que cet axe est parallèle à la gravure du réseau. Ce réseau 32, présentant un débattement angulaire d'environ 8°, est un réseau travaillant dans l'ultraviolet à vide. Il permet de sélectionner des photons dont la longueur d'onde est comprise entre 100 et 1 000 angströms (Å). La sélection de la longueur d'onde se fait en modifiant la position du réseau par example au moyen d'un bras "sinus" couplé à un moteur pas à pas, de type connu, schématisé en 36, relié par un passage tournant ultravide au support 34.

L'extrémité du tube 26, pénétrant dans l'enceinte à vide 2, est munie d'une fente 38, d'ouverture réglable constituant la fente d'entrée du monochromateur 10 par laquelle passent les photons émis par l'échantillon 4, cette fente étant située à l'intérieur de l'enceinte à vide 2 et l'extrémité du tube 28, situé en regard du détecteur 12, est munie d'une fente réglable 40, constituant la fente de sortie du monochromateur, par laquelle passent les photons de longueur d'onde sélectionnée afin d'être comptés par le détecteur 12.

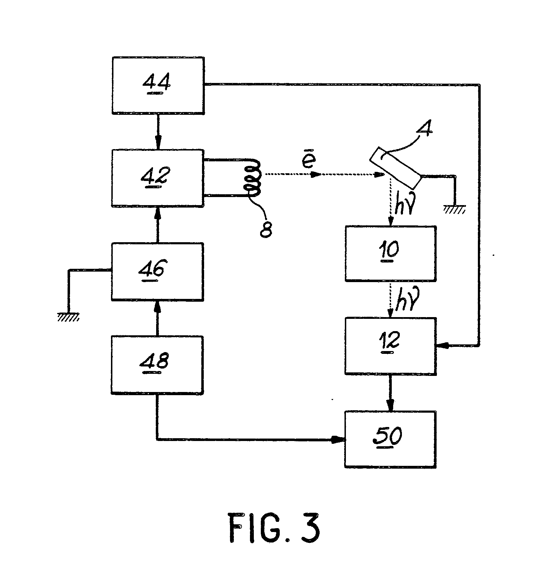

Sur la figure 3, on a représenté un schéma synoptique du dispositif de l'invention permettant d'expliquer le principe de fonctionnement de celui-ci.

Le filament 8, constituant la source d'électrons, est chauffé de manière pulsée au moyen d'un dispositif de chauffage 42 commandé par un circuit de pulsation 44 dontle but est également de bloquer et de débloquer le détecteur 12. Par ailleurs, le filament est porté à un certain potentiel V par rapport à l'échantillon 4 au moyen d'un dispositif 46 servant à appliquer l'énergie initiale $E_i$ aux électrons bombardant l'échantillon 4.

Après le temps de chauffage du filament 8 (2 ms), le chauffage est coupé au moyen du circuit de commande 44 de façon que le filament soit équipotentiel. L'interruption de chauffage débloque le comptage (pendant 8 ms) au moyen du détecteur 12 des photons de même énergie sélectionnés par le monochromateur 10.

Le dispositif 46 est relié à un circuit de commande 48 permettant d'effectuer un balayage en tension, donc de modifier l'énergie $E_i$ des électrons, lorsque l'on détecte les photons de même énergie. Le circuit de commande 48 et le détecteur 12 sont reliés à un sélecteur multicanaux 50, ce qui permet d'obtenir le spectre isochromatique du rayonnement de freinage ou spectre BIS pour la détection de photons de même énergie.

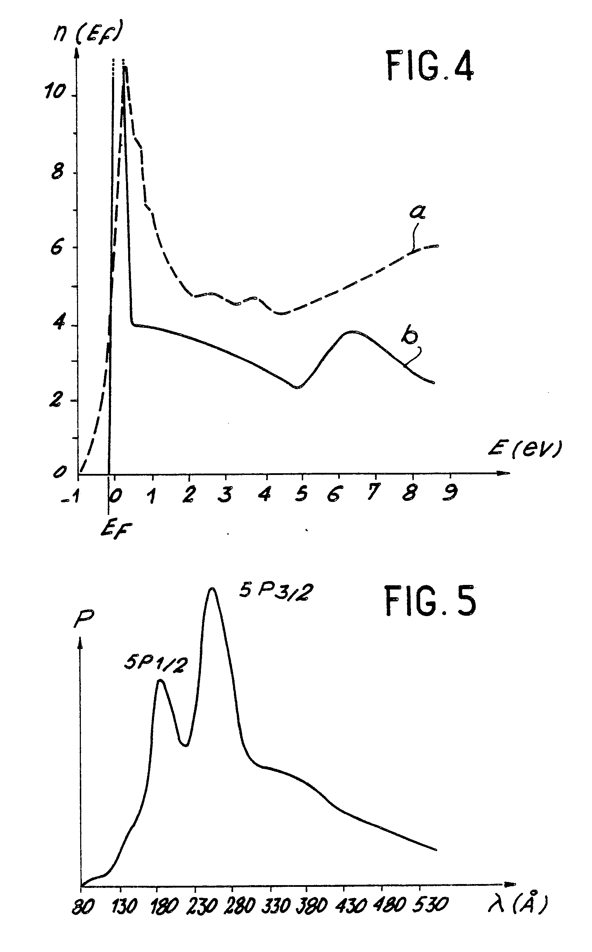

Un exemple de spectre BIS est représenté sur la figure 4, et donne en première approximation la densité des états électroniques inoccupés $n(E_f)$ en fonction de l'énergie $E_i$ des électrons exprimés en électron-volt (eV). Ce spectre est celui du platine pour des photons présentant une énergie de 24,8 électrons-volts ou une longueur d'onde de 500 Å; la courbe *a* représente la courbe expérimentale, et la courbe *b* la courbe théorique.

La courbe de la figure 4 correspond à un balayage de $E_i$ autour de la valeur $E_1$ = 24,8 eV. Le temps nécessaire à son acquisition est de l'ordre d'une heure. Si on désire enregistrer un nouveau spectre avec une deuxième valeur $E_i$ autour de $E_2$ = 50 eV par exemple, il faut encore une heure.

On pourrait diminuer le temps d'acquisition de la même quantité d'informations en détectant les photons à l'aide d'une multidétection (galette de microcanaux associée à une anode résistive à localisation xy). Dans ce cas la fente de sortie 40 du monochromateur 10 pourrait être supprimée ou présenter une grande ouverture afin de détecter simultanément les photons dans un large domaine de longueurs d'onde. Cette amélioration du temps d'acquisition permettrait d'envisager l'utilisation de canon à électrons de basse énergie dont le courant de faisceau est dans l'état de l'art actuel trop faible. On pourrait, ainsi, grâce à une variation de l'angle d'incidence sur l'échantillon accéder à la mesure des courbes de dispersion

$$\vec{E}(\vec{k}) \text{ (k étant le vecteur d'onde)}$$

des états inoccupés. Cette mesure serait la contrepartie de la détermination des courbes de dispersion

$$\vec{E}(\vec{k}) \quad \cdot$$

des états occupés obtenue en photoémission angulaire dans le domaine 10 à 100 eV.

Afin d'améliorer la résolution du dispositif de l'invention, la dimension de la fente d'entrée 38 peut être modifiée en fonction de l'énergie incidente $E_i$ des électrons au moyen d'un dispositif de commande 52. En effet, pour les faibles énergies des électrons incidents (inférieure à 20 eV) le courant d'émission électronique est faible et on est amené à ouvrir les fentes du monochromateur, ce qui modifie peu la résolution énergétique dans ce domaine mais augmente le taux de comptage. En revanche, pour des énergies élevées, le courant d'émission augmente fortement, donc le taux de comptage aussi et on peut se permettre de travailler avec des fentes plus étroites ce qui augmente la résolution.

Par exemple, pour un réseau ultraviolet comprenant 550 traits par millimètre, correspondant à une dispersion de 20 Å/mm, et si l'on se fixe une résolution en énergie des photons détectés de 1 eV, la fente d'entrée 38 sera de 0,1 mm pour une énergie de 50 eV, tandis qu'elle sera de 0,6 mm pour une énergie de 20 eV.

Pour augmenter la résolution du dispositif, on peut utiliser un réseau ultraviolet présentant deux fois plus de traits par millimètre tout en conservant les mêmes corrections d'aberration, ceci double la dispersion, donc double la résolution pour les mêmes fentes.

Par rapport aux dispositifs de l'art antérieur, ce dispositif est très commode à utiliser. En effet, le monochromateur ne mesure que 60 cm, ce qui est très peu encombrant. Par ailleurs, son positionnement par rapport à l'échantillon est aisé à effectuer au moyen du soufflet 20 solidaire du tube 26 du monochromateur 10. De plus, le réglage optique du réseau ne pose aucun problème.

Le fait de pouvoir choisir, selon l'invention différentes valeurs d'énergie, des photons, c'est-à-dire différentes longueurs d'onde, et pour chacune de ces énergies obtenir le spectre BIS en effectuant un balayage de l'énergie $E_i$, permet, par rapport au dispositif de l'art antérieur, de déterminer les sections efficaces du phénomène BIS en fonction de l'énergie des électrons incidents.

De plus, le dispositif de l'invention permet d'établir pour un matériau donné le spectre de fluorescence en ultraviolet dudit matériau excité par des électrons. Ce spectre est établi en bombardant l'échantillon au moyen d'un faisceau d'électrons d'énergie fixe et en détectant les photons émis en effectuant un balayage en longueur d'onde de ces photons. Ceci est fort possible au moyen du réseau mobile dont la rotation peut être commandée par un moteur pas à pas.

Dans ce cas, le bombardement électronique sert à exciter un électron lié du matériau en le faisant passer d'un état d'énergie $E_a$ à un état d'énergie $E_b$ supérieur au niveau de Fermi $E_F$. La désexcitation de la vacance ainsi créée sur le niveau $E_a$ par des électrons dont l'énergie $E_i$ est comprise entre $E_a$ et $E_F$ entraîne l'émission d'un photon d'énergie h tel que $h = E_i - E_a$.

Le spectre de fluorescence UV est caractéristique de l'échantillon, ce qui permet de contrôler sa composition. Un exemple pour le platine a été représenté sur la figure 5.

Sur cette figure on a porté en abscisse les longueurs d'onde $\lambda$ expremées en Å et en ordonnée le nombre de photons P émis par fluorescence par un échantillon de platine excité par des électrons d'énergie fixe et égal à 500 eV. Le doublet observé $5P_{1/2}$ et $5P_{3/2}$ correspond à la désexcitation des vacances créées dans les sous-couches atomiques $5P_{1/2}$ et $5P_{3/2}$.

L-étude du spectre de BIS devrait permettre d'étudier les phénomènes d'absorption, de corrosion et d'oxydation d'un matériau. En outre dans un semi-conducteur, la fraction de la bande interdite comprise entre $E_F$ et les premiers états inoccupés peut être déterminée directement sur les spectres.

**Revendications**

1. Dispositif pour déterminer la densité des états électroniques inoccupés d'un matériau, situés au-dessus dù niveau de Fermi et pour effecteur l'analyse par fluorescence ultraviolette d'un matériau excité par des électrons comprenant:
— une enceinte à vide (2) susceptible de contenir un échantillon (4) d'un matériau;
— des moyens (8, 42, 44, 46, 48) pour créer un faisceau d'électrons d'énergie $E_i$, présentant une intensité suffisante pour que leur interaction avec l'échantillon (4) soit aisément détectable, les électrons acquérant, alors, des énergies $E_f$, inférieures à l'énergie $E_i$, le passage entre les deux niveaux d'énergie s'accompagnant d'une émission de photons dont l'énergie $h\nu_{if}$ est telle que $h\nu_{if} = E_i - E_f$;
— des moyens (46) pour effectuer un balayage en énergie $E_i$; et,
— des moyens de mesure (10, 12, 50) du rayonnement provenant de l'échantillon (4);
ce dispositif étant caractérisé en ce que les moyens de mesure sont placés sous vide et en ce qu'ils comprennent:
— une deuxième enceinte (30) munie de deux tubes (26, 28) inclinés l'un par rapport à l'autre, un premier tube (26) pénétrant dans l'enceinte à vide (2), muni d'une fente d'entrée (38) de largeur réglable, située dans l'enceinte à vide (2), et un deuxième tube (28) muni d'une fente de sortie réglable (40);
— une réseau de diffraction (32), susceptible de tourner autour d'un axe parallèle à la gravure de celui-ci, permettant de sélectionner l'une des longueurs d'onde des photons émis, ledit réseau (32) etant situé dans la deuxième enceinte (30);
— des moyens (34, 36) pour faire tourner ledit réseau (32), l'angle de rotation du réseau étant lié à la sélection de ladite longueur d'onde; et
— des moyens de comptage (12) des photons de même longueur d'onde, sélectionnée par le réseau (32), lors du balayage en énergie des électrons, ces moyens de comptage (12) étant situés en regard de la fente de sortie (40).

2. Dispositif selon la revendication 1, caractérisé en ce que le réseau (32) permet de sélectionner des longueurs d'onde comprises entre 100 et 1 000 angströms.

3. Dispositif selon l'une quelconque des revendications 1 et 2, caractérisé en ce que l'intensité du faisceau d'électrons est au moins de l'ordre de 1 milliampère.

4. Dispositif selon l'une quelconque des revendications 1 à 3, caractérisé en ce que les moyens de détection (12) sont constitués d'un photomultiplicateur tubulaire.

5. Dispositif selon l'une quelconque des revendications 1 à 4, caractérisé en ce que, les moyens pour créer le faisceau d'électrons comprenant un filament (8), situé dans l'enceinte à vide (2) et porté à un potentiel V par rapport à l'échantillon (4), il comprend, en outre, des moyens (44) pour commander de manière pulsée et alternativement le chauffage du filament (8) et la détection et la comptage des photons de même longueur d'onde.

6. Dispositif selon l'une quelconque des revendications 1 à 5, caractérisé en ce que le premier tube (26) comprend, en outre, un soufflet métallique (20) permettant de régler la position des moyens de mesure par rapport à l'échantillon, lorsque le dispositif est en fonctionnement.


**Patentansprüche**

1. Vorrichtung zur Bestimmung der Dichte von sich oberhalb des Fermi-Niveaus befindenden, nicht besetzten Elektronenschalen eines Materials und zur Durchführung der UV-Fluoreszenzanalyse eines mit Elektronen angeregten Materials mit:
— einer Vakuumkammer (2), die eine Materialprobe (4) enthalten kann,
— Mitteln (8, 42, 44, 46, 48) zum Erzeugen eines Strahls von Elektronen der Energie $E_i$, der eine ausreichende Intensität aufweist, damit ihre Wechselwirkung mit der Probe (4) ohne weiteres erfaßare ist, wobeie die Elektronen dann Energien $E_f$ erreichen, die niedriger als die Energie $E_i$ sind, und der Übergang zwischen den zwei Energieniveaus von einer Emission von Photonen begleitet ist, deren Energie $hv_{if}$ derart ist, daß $hv_{if} = E_i - E_f$;
— Mitteln (46), um eine Abtastung bezüglich der Energie $E_i$ durchzuführen, und
— Mitteln (10, 12, 50) zur Messung der von der Probe (4) herkommenden Strahlung, dadurch gekennzeichnet, daß die Mittel zur Messung dem Vakuum ausgesetzt sind und daß sie umfassen:
— eine zweite Kammer (30), die mit zwei Rohren (26, 28) versehen ist, die in Bezug aufeinander geneigt sind, wobei ein erstes, in die Vakuumkammer (2) eindringendes Rohr (26) mit einem Eintrittsschlitz (38) einstellbarer Weite versehen ist, der sich in der Vakuumkammer (2) befindet und ein zweites Rohr (28) mit einem einstellbaren Austrittsschlitz (40) versehen ist,
— ein Beugungsgitter (32), welches um eine zu dessen Linien parallele Achse verdrehbar ist, um eine der Wellenlängen der emittierten Photonen auswählen zu können, und wobei sich das Gitter (32) in der zweiten Kammer (30) befindet,
— Mittel (34, 36), um das Gitter (32) drehen zu lassen, wobei der Drehwinkel des Gitters mit der Auswahl der Wellenlänge verbunden ist, und
— Mittel (12) zum Zahlen von Photonen gleicher Wellenlänge, die von dem Gitter (32) bei der Energieabtastung der Elektronen ausgewählt sind, wobei sich diese Mittel (12) zum Zählen gegenüber dem Austrittsschlitz (40) befinden.

2. Vorrichtung nach Anspruch 1, dadurch gekennzeichnet, daß mit dem Gitter (32) Wellenlängen zwischen 100 und 1000 Angström auswählbar sind.

3. Vorrichtung nach Anspruch 1 oder 2, dadurch gekennzeichnet, daß die Intensität des Elektronenstrahls wenigstens von der Größenordnung 1 mA ist.

4. Vorrichtung nach einem der Ansprüche 1 bis 3, dadurch gekennzeichnet, daß die Erfassungsmittel (12) von Photonenvervielfacherröhren gebildet sind.

5. Vorrichtung nach einem der Ansprüche 1 bis 4, dadurch gekennzeichnet, daß die Mittel zum Erzeugen des Elektronenstrahls einen Faden (8) umfassen, der sich in der Vakuumkammer (2) befindet und an dem ein Potential V in Bezug auf die Probe (4) anliegt, und daß die Vorrichtung ferner Mittel (44) umfaßt, um die Heizung des Fadens (8) und die Erfassung und das Zählen der Photonen gleicher Wellenlänge gepulst und abwechselnd zu steuern.

6. Vorrichtung nach einem der Ansprüche 1 bis 5, dadurch gekennzeichnet, daß das erste Rohr (26) ferner einer Wellrohrfeder (20) aufweist, um die Lage der Meßmittel in Bezug auf die Probe einzustellen, wenn sich die Vorrichtung in Betrieb befindet.


**Claims**

1. Apparatus for determining the density of unoccupied electron states of a material which are situated above the Fermi level and for carrying out the analysis, by ultraviolet fluorescence, of a material excited by electrons, the said apparatus comprising:
a vacuum chamber (2) capable of containing a sample (4) of a material;
means (8, 42, 44, 46, 48) for generating a beam of electrons of energy $E_1$, having an intensity which is sufficient for their interaction with the sample (4) to be readily detectable, the electrons then acquiring energies $E_f$ which are lower than the energy $E_i$, the transition between the two energy levels being accompanied by an emission of photons, the energy $hv_{if}$ of which is such that $hv_{if} = E_i - E_f$;

means (46) for effecting a scan at energy $E_i$; and

means (10, 12, 50) for measuring the radiation originating from the sample (4);

this apparatus being characterized in that the measuring means are placed under vacuum and in that they comprise:

a second chamber (30) provided with two tubes (26, 28) inclined in relation to one another, a first tube (26) which penetrates into the vacuum chamber (2) and which is provided with an entrance slit (38) of regulable width, which slit is situated within the vacuum chamber (2), and a second tube (28) provided with a regulable exit slit (40);

a diffraction grating (32), capable of rotating about an axis parallel to the engraving thereof, permitting selection of one of the wavelengths of the photons emitted, the said grating (32) being situated within the second chamber (30);

means (34, 36) for causing the said grating (32) to rotate, the angle of rotation of the grating being associated with the selection of the said wavelength; and

means (12) for counting the photons of the same wavelength, which is selected by the grating (32) in the course of the energy scanning of the electrons, these counting means (12) being situated to face the exit slit (40).

2. Apparatus according to Claim 1, characterized in that the grating (32) permits selection of wavelengths within the range between 100 and 1,000 Ångström units.

3. Apparatus according to either one of Claims 1 and 2, characterized in that the intensity of the beam of electrons is at least of the order of one milliampere.

4. Apparatus according to any one of Claims 1 to 3, characterized in that the detecting means (12) comprise a photomultiplier tube.

5. Apparatus according to any one of Claims 1 to 4, characterized in that, the means for generating the beam of electrons comprising a filament (8) situated within the vacuum chamber (2) and brought to a potential V relative to the sample (4), it further comprises means (44) for initiating in a pulsed manner and alternatively the heating of the filament (8) and the detection and counting of the photons of the same wavelength.

6. Apparatus according to any one of Claims 1 to 5, characterized in that the first tube (26) further comprises a metallic bellows (20) permitting regulation of the position of the measuring means relative to the sample, when the apparatus is in operation.

FIG.1

FIG.2

FIG. 3

FIG.4

FIG.5